# EUROPEAN PATENT APPLICATION

(11) **EP 1 752 477 A1**
(43) Date of publication of application: **14.02.2007**
(21) Application number: 05738500.7
(22) Date of filing: 12.05.2005
(51) Int. Cl.: C08F 214/18, B32B 27/30, C08F 2/18, C08F 220/00

(54) **FLUOROCOPOLYMER, PROCESS FOR PRODUCING THE SAME, AND MOLDED OBJECT**

(30) Priority: 24.05.2004 JP 2004152705
(71) Applicant: Unimatec Co., Ltd., Tokyo 105-8585 (JP)
(72) Inventor: KANEGA, Jun; c/o UNIMATEC CO., LTD., Kitaibaraki-shi, Ibaraki; 3191544 (JP); OBARA, Takashi; c/o UNIMATEC CO., LTD., Kitaibaraki-shi, Ibaraki; 3191544 (JP); SUZUKI, Katsumi; c/o UNIMATEC CO., LTD., Kitaibaraki-shi, Ibaraki; 3191544 (JP); ENOKIDA, Takashi; c/o UNIMATEC CO., LTD., Kitaibaraki-shi, Ibaraki; 3191544 (JP)
(74) Representative: Albrecht, Thomas
(86) International application number: PCT/JP2005/008676
(87) International publication number: WO 2005/113618

(57) **Abstract**

A fluorine-containing copolymer, which comprises a copolymer of a fluorine-containing unsaturated monomer, and an unsaturated carboxylic acid, its salt, or its alkyl ester, the copolymer having a melt viscosity (230 °C) of 0.1-100g/10min., including preferably a fluorine-containing copolymer of tetrafluoroethylene, perfluoro(ethyl vinyl ether), vinylidene fluoride, and methacrylic acid, or α-trifluoromethylmethacrylic acid, can undergo melt processing at relatively low processing temperatures, and has a high light transmissivity and a low refractive index, and has a good adhesiveness to various substrates by itself without requiring any surface treatment or use of any adhesive.

## Description

### TECHNICAL FIELD

The present invention relates to a fluorine-containing copolymer, a process for producing the same, and molding products, and more particularly to a fluorine-containing copolymer having a distinguished adhesiveness to various substrates, a process for producing the same, and molding products.

### BACKGROUND ART

Fluorine-containing copolymers can be obtained by copolymerization reaction of fluorine-containing monomers such as vinylidene fluoride, tetrafluoroethylene, hexafluoropropene, chlorotrifluoroethylene, perfluoro(lower-alkyl vinyl ether), etc., and have various characteristics covering from the elastomer region to the resin region. Particularly due to the nature of fluorine-containing materials, the fluorine-containing copolymers have much distinguished characteristics, such as heat stability at elevated temperatures, a toughness and a flexibility at extremely low temperatures, furthermore distinguished chemical resistance, distinguished chemical stability, and non-stickiness, distinguished frictional and electric properties.

By virtue of these characteristics, the fluorine-containing copolymers have been so far effectively used in various fields covering semiconductors, automobiles, architecture, electric and electronic parts, etc., including the food field as well, whereas due to their high costs lamination and composition of the fluorine-containing copolymers with other polymers, etc. have been so far intensively studied to exhibit the characteristics at minimum using amounts. Generally, the fluorine-containing resins have a low surface energy and thus have a bonding problem difficult to other substrates of polymers, metals, glasses, etc.

The following various procedures have been so far proposed to bond the fluorine-containing copolymer to other substrates :
(a) By subjecting the substrate surface to a physical roughening treatment such as a sand-blast treatment, etc. to make use of an anchoring effect between the fluorine-containing copolymer and the substrate,
(b) By subjecting the fluorine-containing resin to a surface treatment such as sodium etching, a plasma treatment, a photochemical treatment, etc. to activate the surface chemically or physico-chemically,
(c) By making use of an adhesive, etc.
The afore-mentioned procedures (a) and (b) require a bonding pretreatment, thus not only complicating the step and lowering the productivity, but also setting a limit to the kind and shape of substrates, and are liable to coloring or damaging the appearances of the resulting laminates, thus the procedures still have various problems to be solved.

As to the procedure (c), many adhesives have been so far investigated. Adhesives of hydrocarbon series are not satisfactory with respect to the heat resistance by themselves, and will undergo thermal decomposition, when applied to fluorine-containing copolymers requiring melt molding or melt processing at elevated temperatures, thereby giving rise to peeling or coloring. The oil resistance, chemical resistance and weathering resistance of the adhesives are not satisfactory and thus the adhesiveness cannot be maintained against changes in the circumstance. This is another problem.

It has been also proposed to use fluorine-containing copolymers having polar functional groups as positioned at the terminals of the main chain as another procedure than the afore-mentioned, where the copolymer is used as a primer or as an adhesive upon blending with a substrate to be bonded. In other words, the fluorine-containing copolymer is not bonded directly to a desired substrate by itself.
Patent Literature 1 : JP-A-2003-176394

It has been further proposed to use fluorine-containing copolymers having polar functional groups as positioned at the terminals of the side chains, where the monomers used to introduce the polar functional groups to the terminals of the side chains are special and expensive monomers containing polar functional groups of perfluoro series, and thus the resulting fluorine-containing copolymers will be inevitably expensive.
Patent Literature 2 : US P No. 4,138,426

### DISCLOSURE OF THE INVENTION

### PROBLEM TO BE SOLVED BY THE INVENTION

An object of the present invention is to provide a fluorine-containing copolymer capable of undergoing melt processing at relatively low processing temperatures, and having a high light transmissivity and a low refractive index, and a good adhesiveness to various substrates by itself, without particularly requiring any surface treatment or use of any adhesive.

### MEANS FOR SOLVING THE PROBLEM

The object of the present invention can be attained by a fluorine-containing copolymer, which comprises a copolymer of a fluorine-containing unsaturated monomer with an unsaturated carboxylic acid, its salt, or its alkyl ester, the copolymer having a melt viscosity (230°C) of 0.1-100g/10min. The fluorine-containing copolymer includes preferably a copolymer of tetrafluoroethylene, perfluoro(ethyl vinyl ether), and vinylidene fluoride with methacrylic acid, or α-trifluoromethylmethacrylic acid.

### EFFECT OF THE INVENTION

The present fluorine-containing copolymer can undergo melt processing at relatively low processing temperatures such as about 180° to about 260°C and has a high light transmissivity at wavelengths of 250-650nm and a low refractive index at the wavelength of 589nm, and also has a good adhesiveness to various substrates by itself, without particularly requiring any surface treatment or use of any adhesive, and thus can be effectively used for formation of laminates or composite products with various substrates.

### BEST MODES FOR CARRYING OUT THE INVENTION

The fluorine-containing unsaturated monomers for use in the present invention includes compounds represented by the following general formula :

R₁R₂C=CR₃R₄

where R₁, R₂, R₃, and R₄ are the same or different groups from one another, each of which is a hydrogen atom, a chlorine atom, a fluorine atom, and a fluoroalkyl group, a fluoroalkyl ether group or a fluoroalkoxyfluoroalkyl ether group, having 1-24 carbon atoms, respectively, and at least one of which is a fluorine atom or a fluorine-containing group, and for example, the compound includes tetrafluoroethylene, hexafluoropropene, trifluorochloroethylene, vinylidene fluoride, vinyl fluoride, perfluoro(methyl vinyl ether), perfluoro(ethyl vinyl ether), perfluoro(propyl vinyl ether), 2,2,3,3,3-pentafluoropropyl vinyl ether, and the following fluoroalkoxyfluoroalkyl ether-containing compounds :

CF₂=CFO(CF₂)₃OCF₃

CF₂=CFOCF(CF₃)CF₂OCF₃

CF₂=CFOCF(CF₃)CF₂OC₃F₇

CF₂=CFOCF(CF₃)CF₂OCF(CF₃)C₄F₉

, preferable are tetrafluoroethylene, vinylidene fluoride, and perfluoro(lower-alkyl vinyl ether).

The fluorine-containing unsaturated monomer is subjected to copolymerization in a proportion of 90% by weight or more, preferably 93-99.9% by weight, on the basis of the copolymer, and when the abovementioned three preferable kinds of fluorine-containing unsaturated monomers are to be used together, they are subjected to copolymerization in proportions of about 30 to about 85% by weight, preferably about 40 to about 80% by weight, of tetrafluoroethylene, about 3 to about 45% by weight, preferably about 5 to about 35% by weight of perfluoro(lower-alkyl vinyl ether), where the lower-alkyl group is methyl, ethyl or propyl, particularly perfluoro(ethyl vinyl ether), and about 1 to about 35% by weight, preferably about 3 to about 33% by weight, of vinylidene fluoride, on the basis of the resulting fluorine-containing copolymer.

In the latter case of using the three preferable monomers, a proportion of less than about 30% by weight of tetrafluoroethylene will make the chemical resistance as one of the characteristics of fluorine-containing copolymer limited, whereas a proportion of more than about 85% by weight thereof will make the melting point and the melt viscosity higher, deteriorating the processability. A proportion of less than about 3% by weight of perfluoro(ethyl vinyl ether) will make the transparency worse, whereas a proportion of more than about 45% by weight thereof will make it hard to produce the copolymer. A proportion of less than about 1% by weight of vinylidene fluoride will make the melting point and the melt viscosity higher, deteriorating the processability, resulting in a failure to obtain soft molding products, whereas a proportion of more than about 35% by weight thereof will make the chemical resistance limited.

Unsaturated carboxylic acid, its salt, or its alkyl ester for use in copolymerization with the afore-mentioned fluorine-containing unsaturated monomer is an unsaturated carboxylic acid or its derivative represented by the following general formulae :

R₅R₆C=CR₇COOR₈, or R₈OOCCR₅C=CR₇COOR₈

where R₅, R₆, and R₇ are the same or different groups from one another, each of which is a hydrogen atom, a fluorine atom, and an alkyl group or a fluoroalkyl group, having 1-6 carbon atoms, respectively, and R₈ is a hydrogen atom, an alkali metal, and an alkyl group or a fluoroalkyl group, having 1-6 carbon atoms, respectively.

The unsaturated carboxylic acid represented by the afore-mentioned general formulae includes the following compounds :
CH₂=CFCOOH, CF₂=CFCOOH, CHF=CFCOOH, CF₃CF=CFCOOH, CH₃CF=CFCOOH, CH₂=CHCOOH, CF₂=CHCOOH, CHF=CHCOOH, CF₃CF=CHCOOH, CH₃CF=CHCOOH, CH₂=C(CF₃)COOH, CF₂=C(CF₃)COOH, CHF=C(CF₃)COOH, CF₃CF= C(CF₃)COOH, CH₃CF=C(CF₃)COOH, CH₂=C(CHF₂)COOH, CF₂=C(CHF₂)COOH, CHF=C(CHF₂)COOH, CF₃CF=C(CHF₂)COOH, CH₃CF=C(CHF₂)COOH, CH₂=C(CH₂F)COOH, CF₂=C(CH₂F)COOH, CHF=C(CH₂F)COOH, CF₃CF=C(CH₂F)COOH, CH₃CF=C(CH₂F)COOH, CH₂=C(CH₃)COOH CF₂=C(CH₃)COOH, CHF=C(CH₃)COOH, CF₃CF=C(CH₃)COOH CH₃CF=C(CH₃)COOH, CH₃CH=CFCOOH, CH₃CH=CHCOOH, CH₃CH=C(CF₃)COOH, CH₃CH=C(CHF₂)COOH, CH₃CH=C(CH₂F)COOH, CH₃CH=C(CH₃)COOH, and HOOCCH=CHCOOH. Preferable are acrylic acid, methacrylic acid, crotonic acid, α-trifluoromethylacrylic acid, α-fluoroacrylic acid, maleic acid, fumaric acid, etc.

The afore-mentioned unsaturated carboxylic acids, their alkali metal salts or (fluoro)alkyl ester derivatives are subjected to copolymerization in a proportion of not more than 10% by weight, preferably about 0.1 to about 7% by weight, on the basis of the copolymer. Copolymerization in a proportion of more than 10% by weight will not only deteriorate the transparency and heat resistance, but also make the refractive index higher, though the adhesiveness will be increased, whereas copolymerization without the unsaturated carboxylic acids, their alkali metal salts or (fluoro)alkyl ester derivatives will deteriorate the adhesiveness particularly.

The fluorine-containing copolymer can be produced by any copolymerization process such as solution polymerization, emulsion polymerization, suspension polymerization, etc., among which solution polymerization, suspension polymerization, and solution-suspension polymerization, which can readily reduce the content of impurities coming from polymerization raw materials, are preferable, and particularly preferable is the solution-suspension polymerization, which can readily make unsaturated carboxylic acid (derivative) component undergo copolymerization reaction.

In the solution polymerization and solution-suspension polymerization, chlorinated and/or fluorinated carbon such as chlorofluorocarbon, hydrochlorocarbon, hydrofluorocarbon, hydrochlorofluorocarbon, etc., and perfluoro compounds such as perfluoro(2-n-butyltetrahydrofuran), perfluorohexane, etc. can be preferably used as a solvent for the polymerization reaction. Alcohols or hydrocarbons can be also used as the solvent.

In the solution-suspension polymerization, a mixture of water with a solvent having no or poor compatibility with water is used as a solvent for the polymerization reaction. A mixing ratio of water to the solvent can be changed as desired, depending on polymerization temperature, polymerization pressure, amounts of charged raw material monomers, etc., but from the viewpoint of removal of the heat of polymerization and uniformity of copolymer composition, it is preferable to make the water present in an amount of about 0.1 to about 10 parts by weight, preferably about 1 to about 5 parts by weight per one part by weight of the solvent.

It is also preferable to use the water as an aqueous solution of NaOH, KOH, NaHCO₃, KNaCO₃ · 6H₂O, Na₂CO₃, K₂CO₃, Na₂HPO₄ · 12H₂O, K₂HPO₄, (NH₄)₂HPO₄, aqua ammonia, or the like as dissolved therein, preferably an aqueous alkaline solution of an alkali metal salt as dissolved therein. The reaction system containing the aqueous alkaline solution may change into an acidic side in progress of polymerization reaction, depending on reaction conditions, composition ratio, etc., thereby suppressing the progress of polymerization reaction. In such a case, the aqueous alkaline solution may be supplemented again in the course of polymerization reaction. Thus, it is preferable to keep the reaction system at a pH of 5-12.

A polymerization initiator can be selected generally from an organic peroxide, an azo compound, an inorganic peroxide, etc. in view of the desired polymerization process. Furthermore, in view of the heat resistance, chemical resistance, etc. of the resulting fluorine-containing copolymer, an organic peroxide is preferable. The organic peroxide for use herein includes, for example, diacyl peroxide, peroxycarbonate, peroxyester, etc., preferably radical initiators such as isobutyryl peroxide, lauroyl peroxide, stearoyl peroxide, succinic acid peroxide, di-n-propyl peroxydicarbonate, diisopropyl peroxycarbonate, bis(4-t-butylcyclohexyl) peroxydicarbonate, etc., and fluorine-containing radical initiators such as bis(heptafluorobutyryl) peroxide, pentafluorobutyroyl peroxide, etc.

The amount of polymerization initiator to be used depends on a solvent for polymerization reaction, polymerization conditions, polymerization temperature, etc., and thus cannot be necessarily specified, but the polymerization initiator can be generally added at charging time in an amount of about 0.01 to about 20% by mole, preferably about 0.1 to about 10% by mole, on the basis of total moles of monomers fed to the polymerization reaction. Progress of polymerization reaction is sometimes suppressed, depending on the reaction conditions or composition ratio, and in such a case the polymerization initiator may be supplemented again in the course of polymerization reaction.

A chain transfer agent such as methanol, ethanol, 2-propanol, n-hexane, cyclohexane, carbon tetrachloride, chloroform, dichloromethane, methane, ethyl acetate, acetone, etc. can be added to the reaction system to adjust the molecular weight.

Polymerization temperature is not particularly limited, but the reaction is carried out in a temperature range of about 0° to about 100 °C, preferably about 5° to about 60 °C, and under polymerization pressure in a range of about 0.1 to about 5MPa · G, preferably about 0.2 to about 3MPa · G. After the completion of the reaction, the solvent for polymerization reaction is distilled off under reduced pressure from the reaction mixture, followed by washing with ion-exchanged water, drying, etc., if required, whereby a desired fluorine-containing copolymer can be obtained.

It is preferable that the resulting fluorine-containing copolymer has a melting point of 230°C or less, and a melt flow rate MFR (230°C) of 0.1-100g/10min., which shows a melt viscosity. In the case of the fluorine-containing copolymer having a melting point of more than 230°C, the molding temperature must be set higher, so is excess heat given to substrates at the time of lamination or composition with substrates, resulting in decomposition or foaming, depending on the kinds of substrates. When the melt flow rate is below 0.1g/10min., the molding temperature must be also set higher, whereas above 100g/10min. not only the molding is hard to conduct, but also the characteristics of high molecular weight polymer, particularly the strength, elongation, etc. will not be exhibited.

The fluorine-containing copolymer so produced can be processed into various molding products such as films, sheets, tubes, hoses, rods, blocks, belts, bottles, tanks, etc. by various molding processes according to melt viscosities at selected molding temperatures such as compression molding, extrusion molding, calendering, blow molding, injection molding, casting, etc., or further by a processing method as a secondary processing such as cutting, welding, melting, etc.

The fluorine-containing copolymer can be formed into molding products in a multilayered structure or composite products in various shapes such as multilayered films, multilayered sheets, multilayered tubes, multilayered hoses, multilayered rods, multilayer blocks, multilayered bottles, etc. by coextrusion with various polymers such as polyacrylic acid resin, polyamide resin, polycarbonate resin, polyester resin, polyurethane resin, etc.

Ordinary thermoplastic resin molding machines, for example, extrusion molding machine, compression molding machine, injection molding machine, blow molding machine, etc. can be used for the molding, and such a molding process as a multilayer coextrusion molding process, a multilayer blow molding process, a multilayer injection molding process, etc. can be used for the molding of molding products in a multilayered structure. The multilayer coextrusion molding process is particularly preferable for molding multilayered tubes, multilayered rods, etc.

The molding conditions depend on melt viscosities of fluorine-containing copolymer or thermoplastic resin to be used therewith for forming in a multilayered structure or composite products, and in the case of extrusion molding or blow molding it is preferable to set such a temperature as to provide a melt viscosity of 1-50g/10min. as a cylinder temperature. For example, a temperature range of about 180° to about 260°C is used as a preferable molding temperature range.

The multilayered structure can be formed by melt compressing the fluorine-containing copolymer onto polyimide resin as a heat-resistant resin or a metal, glass or the like as an inorganic substrate. Melt compression temperature must be a melting point or higher of the fluorine-containing copolymer to be used, and is preferably in a range of about 150° to about 260°C.

The multilayered structure can be also formed by casting a solutions of the fluorine-containing copolymer in various organic solvents such as used as a solvent for the polymerization reaction onto substrates of various resin molding products, synthetic fiber products, semi-synthetic products, metallic products, glass products, etc., followed by drying off the solvents. Drying temperature depends on the kinds of solvents used, and is generally in a range of about 30° to about 260°C.

### EXAMPLES

The present invention will be described in detail below, referring to Examples.

### EXAMPLE 1

An SUS316 autoclave having a net capacity of 100L and provided with a stirrer was degassified to vacuum, and charged with the following components :

| | |
|---|---|
| Perfluoro(2-n-butyltetrahydrofuran) | 75.0Kg |
| Ion-exchanged water | 11.3Kg |
| Na₂HPO₄ · 12H₂O | 2.0Kg |
| Methacrylic acid | 0.1Kg |

, then the autoclave was degassified and flushed with a nitrogen gas, charged with each of the following components as an initial charge :

| | |
|---|---|
| Tetrafluoroethylene [TFE] | 11.0Kg |
| Perfluoro(ethyl vinyl ether) [FEVE] | 17.3Kg |
| Vinilidene fluoride [VdF] | 2.0Kg |

, and heated to 30°C, whereby the inside pressure of the autoclave reached to 0.76MPa · G. Then, an isobutyryl peroxide solution in a solvent mixture (weight ratio 1:1) of CF₃CF₂CHCl₂/CClF₂CF₂CHClF as a polymerization initiator was fed into the autoclave by a rating pump to start the polymerization reaction, and the polymerization reaction was continued until the inside pressure reached to 0.33MPa · G, while keeping the pH in a range of 7-10.

Then, the autoclave was subjected to pressure reduction by a vacuum pump through a trap for cooling and recovering the solvents and unreacted monomers, while stirring the contents in the autoclave, whereby the solvents and unreacted monomers were completely removed from the autoclave. The polymers discharged from the autoclave were washed with ion-exchanged water, and then the polymers were recovered by a centrifugal filter, and dried under reduced pressure, whereby white powdery fluorine-containing copolymer was obtained.

The fluorine-containing copolymer thus obtained was subjected to determination or evaluation of the following items :
Copolymer composition : by ¹⁹F-NMR and infrared absorption spectrum (% by weight)
Hardness : according to JIS K7215 (D hardness at 25°C)
Melting point: measured by a Seiko Instrument DSC220C type with a temperature program of heating a sample from 30°C to 280°C at a temperature elevation rate of 10°C /min., then cooling down to 30°C at a cooling rate of 10°C/min., and reheating up to 280°C at a temperature elevation rate of 10°C/min., where the apex temperature of heat absorption peak was taken for a melting point
Melt viscosity : measured by a Toyo Seisakusho melt indexer by placing the resulting copolymer into a cylinder, 9.5mm in inner diameter, keeping the temperature at 230°C for 5 minutes, and extruding it through an orifice, 2.095mm in inner diameter, and 8.00mm long, under a piston load of 5Kg to measure the weight of the extrudate
Light transmissivity : measured by a Nihon Bunko ultraviolet-visible spectrophotometer
whereby a film, 100 µ m thick, was subjected to determination at each wavelength of 250nm, 450nm, and 650nm
Refractive index : measured by an Abbe refractometer whereby determination was made at 25°C and the wavelength of 589nm
Melt molding : by a Thermoplastic Kogyo Type TP-30 extruder whereby tubes (2mm in diameter), rods (1mm in diameter), and films (0.5mm thick) were molded under the following conditions :

| | |
|---|---|
| Set temperature at the outlet side of molding products | D 230°C |
| Set internal temperature of melting heater | C₄ 220°C |
| | C₃ 200°C |
| | C₂ 170°C |
| Set temperature at the feed side of raw material fluororesin | C₁ 150°C |

and the molding products found to good shaping were evaluated as satisfactory (○), whereas those found to have inconveniences such as melt fractures, unstable dimensions, etc. or failures to mold were evaluated as unsatisfactory (×)
Adhesiveness : the fluorine-containing copolymer was compression-molded at 190°C on each of substrates of polymethyl methacrylate [PMMA], nylon-12, and polyurethane elastomer [thermoplastic PU] (Iron rubber U801, a Unimatec product) to get the surface of molded sheet cross-cut into 100 squares (1mm × 1mm), and deficient cross-cut portions were formed by a cross-cut test and a cross-cut tape peeling test, whereby the presence of deficient cross-cut portion were evaluated, by a ten-point method, i.e. 10 points (good)-0 point (poor), where 0-2 points were taken for "poor" (×), 3-7 points for fair (Δ), and 8-10 points for good (○)

### EXAMPLE 2

In Example 1, 0.35Kg of α-trifluoromethylacrylic acid was used in place of methacrylic acid.

### EXAMPLE 3

In Example 1, the amounts of the initial charge were changed to 7.5Kg of TFE, 21.5Kg of FEVE, and 2.6Kg of VdF.

### COMPARATIVE EXAMPLE 1

In Example 1, no methacrylic acid was used.

### COMPARATIVE EXAMPLE 2

In Example 3, no methacrylic acid was used.

Results of determination or evaluation in the foregoing Examples and Comparative Examples are shown in the following Table, together with copolymer compositions.

**Table**

| Item of determination | | Ex.1 | Ex. 2 | Ex. 3 | Comp. Ex. 1 | Comp. Ex. 2 |
|---|---|---|---|---|---|---|
| [Copolymer composition, % by wt.] | | | | | | |
| TFE | | 70 | 68 | 55 | 70 | 55 |
| FEVE | | 18 | 17 | 27 | 19 | 28 |
| VdF | | 11 | 11 | 17 | 11 | 17 |
| Methacrylic acid | | 1 | - | 1 | - | - |
| α-trifluoromethylmethacrylic acid | | - | 4 | - | - | - |

| [Properties] | | | | | | |
|---|---|---|---|---|---|---|
| Hardness | | | | | | |
| Shore D(25°C) | | 57 | 55 | 40 | 47 | 38 |

| Melting point | | | | | | |
|---|---|---|---|---|---|---|
| Tm | (°C) | 180 | 175 | 118 | 179 | 115 |

| Melt viscosity | | | | | | |
|---|---|---|---|---|---|---|
| MFR(230°C) (g/10min.) | | 16 | 70 | 40 | 14 | 35 |

| Light transmissivity | | | | | | |
|---|---|---|---|---|---|---|
| 250nm | (%) | 66 | 10 | 55 | 81 | 75 |
| 450nm | (%) | 89 | 64 | 81 | 91 | 83 |
| 650nm | (%) | 92 | 80 | 83 | 92 | 84 |

| Refractive index | | | | | | |
|---|---|---|---|---|---|---|
| 25°C, 589nm | | 1.35 | 1.35 | 1.35 | 1.35 | 1.35 |

| Melt moldability | | | | | | |
|---|---|---|---|---|---|---|
| Tubes | | ○ | ○ | ○ | ○ | ○ |
| Rods | | ○ | ○ | ○ | ○ | ○ |
| Films | | ○ | ○ | ○ | ○ | ○ |

| Adhesiveness | | | | | | |
|---|---|---|---|---|---|---|
| PMMA | | ○ | ○ | ○ | Δ | ○ |
| Nylon-12 | | ○ | ○ | ○ | × | Δ |
| Thermoplastic PU | | ○ | ○ | ○ | Δ | Δ |

### INDUSTRIAL UTILITY

The present fluorine-containing copolymer has not only good melt processability without any substantial deterioration of distinguished light transmissivity in the visible light region or a low light refractiveness, but also has remarkable characteristics as a good adhesiveness to various substrates, and thus can be used effectively as various molding materials for films, sheets, tubes, hoses, rods, blocks, belts, bottles, tanks, etc., or as laminating materials or composite materials with various substrates, and the resulting molding products, laminates, and composite products can be suitably used in applications requiring a chemical resistance, a high light transmissivity, a low light refractiveness, a dielectric resistance, etc. such as chemical liquid tubes, fuel hoses, antireflection films, etc.

## Claims

1. A fluorine-containing copolymer, which comprises a copolymer of a fluorine-containing unsaturated monomer with an unsaturated carboxylic acid, its salt, or its alkyl ester, the copolymer having a melt viscosity (230°C) of 0.1-100g/10min.

2. A fluorine-containing copolymer according to Claim 1, where the fluorine-containing unsaturated monomer is a compound represented by the following general formula :
R₁R₂C=CR₃R₄
, where R₁, R₂, R₃, and R₄ are the same or different groups from one another, each of which is a hydrogen atom, a chlorine atom, a fluorine atom, and a fluoroalkyl group, a fluoroalkyl ether group, or a fluoroalkoxyfluoroalkyl ether group, having 1-24 carbon atoms, respectively, and at least one of which is a fluorine atom or a fluorine-containing group.

3. A fluorine-containing copolymer according to Claim 1, wherein the fluorine-containing unsaturated monomer is copolyemerized in a proportion of 90% by weight or more on the basis of the copolymer.

4. A fluorine-containing copolymer according to Claim 3, wherein 30-85% by weight of tetrafluoroethylene, 3-45% by weight of perfluoro-(lower alkyl vinyl ether), and 1-35% by weight of vinylidene fluoride are copolymerized as the fluorine-containing unsaturated monomers.

5. A fluorine-containing copolymer according to Claim 1, wherein the unsaturated carboxylic acid, its salt, or its alkyl ester is an unsaturated carboxylic acid or its derivative represented by the following general formulae :
R₅R₆C=CR₇COOR₈, or R₈OOCR₅C=CR₇COOR₈
where R₅, R₆, and R₇ are the same or different groups from one another, each of which is a hydrogen atom, a fluorine atom, and an alkyl group, or fluoroalkyl group, having 1-6 carbon atoms, respectively, and R₈ is a hydrogen atom, an alkali metal, and an alkyl group or a fluoroalkyl group, having 1-6 carbon atoms, respectively.

6. A fluorine-containing copolymer according to Claim 1, wherein methacrylic acid or its derivative is copolymerized in a proportion of 10% by weight or less on the basis of the copolymer.

7. A fluorine-containing copolymer according to Claim 1, which has a melting point of 230°C or less.

8. A quaternary copolymer of tetrafluoroethylene-perfluoro(ethyl vinyl ether)-vinylidene fluoride-methacrylic acid.

9. A quaternary copolymer of tetrafluoroethylene-perfluoro(ethyl vinyl ether)-vinylidene fluoride-α-trifluoromethylmethacrylic acid.

10. A process for producing a fluorine-containing copolymer, **characterized by** subjecting a fluorine-containing unsaturated monomer, and an unsaturated carboxylic acid, its salt, or its alkyl ester to copolymerization reaction by solution suspension polymerization in the presence of an aqueous alkali solution.

11. A process for producing a fluorine-containing copolymer according to Claim 10, wherein the copolymerization reaction is carried out, while keeping the polymerization reaction system at a pH of 5-12.

12. A molding product made from a fluorine-containing copolymer according to Claim 1.

13. A molding product made from a fluorine-containing copolymer according to Claim 4.

14. A molding product in a multilayered structure or a composite product, which comprises a fluorine-containing copolymer according to Claim 1, and a substrate.

15. A molding product in a multilayered structure or a composite product, which comprises a fluorine-containing copolymer according to Claim 4, and a substrate.

## Amended claims

### Amended claims under Art. 19.1 PCT

**1.** As amended) A fluorine-containing copolymer, which comprises a copolymer of fluorine-containing unsaturated monomers consisting of tetrafluoroethylene, perfluoro(lower alkyl vinyl ether) and vinylidene fluoride, with an unsaturated carboxylic acid, its salt, or its alkyl ester, the copolymer having a melt viscosity (230°C) of 0.1-100g/10min.

**2.** Deleted)

**3.** A fluorine-containing copolymer according to Claim 1, wherein the fluorine-containing unsaturated comonomers are copolymerized in a proportion of 90% by weight or more on the basis of the copolymer.

**4.** A fluorine-containing copolymer according to Claim 3, wherein 30-85% by weight of the tetrafluoroethylene, 3-45% by weight of the perfluoro-(lower alkyl vinyl ether), and 1-35% by weight of the vinylidene fluoride are copolymerized as the fluorine-containing unsaturated monomers.

**5.** A fluorine-containing copolymer according to Claim 1, wherein the unsaturated carboxylic acid, its salt, or its alkyl ester is an unsaturated carboxylic acid or its derivative, represented by the following general formulae :
R₅R₆C=CR₇COOR₈, or R₈OOCR₅C=CR₇COOR₈
, where R₅, R₆ and R₇ are the same or different groups from one another, each of which is a hydrogen atom, a fluorine atom, and an alkyl group or a fluoroalkyl group, having 1-6 carbon atoms, respectively, and R₈ is a hydrogen atom, an alkali metal, or an alkyl group or a fluoroalkyl group, having 1-6 carbon atoms, respectively.

**6.** A fluorine-containing copolymer according to Claim 1, wherein methacrylic acid or its derivative is copolymerized in a proportion of 10% by weight or less on the basis of the copolymer.

**7.** A fluorine-containing copolymer according to Claim 1, which has a melting point of 230°C or less.

**8.** As amended) A quaternary copolymer of tetrafluoroethyleneperfluoro(ethyl vinyl ether)-vinylidene fluoride-methacrylic acid, having a melt viscosity (230°C) of 0.1-100g/10min.

**9.** As amended) A quaternary copolymer of tetrafluoroethyleneperfluoro(ethyl vinyl ether)-vinylidene fluoride-α-trifluoromethylmethacrylic acid, having a melt viscosity (230°C) of 0.1-100g/10min.

**10.** As amended) A process for producing a fluorine-containing copolymer having a melt viscosity (230°C) of 0.1-100g/10min., **characterized by** subjecting fluorine-containing unsaturated monomers consisting of tetrafluoroethylene, perfluoro(lower alkyl vinyl ether), and vinylidene fluoride, with an unsaturated carboxylic acid, its salt, or its alkyl ester to copolymerization reaction by solution suspension polymerization in the presence of an aqueous alkali solution.

**11.** As amended) A process for producing a fluorine-containing copolymer having a melt viscosity (230°C) of 0.1-100g/10min. according to Claim 10, wherein the copolymerization reaction is carried out, while keeping the polymerization reaction system at a pH of 5-12.

**12.** A molding product made from a fluorine-containing copolymer according to Claim 1.

**13.** A molding product made from a fluorine-containing copolymer according to Claim 4.

**14.** A molding product in a multilayered structure or a composite product, which comprises a fluorine-containing copolymer according to Claim 1 and a substrate.

**15.** A molding product in a multilayered structure or a composite product, which comprises a fluorine-containing copolymer according to Claim 4, and a substrate.
